# EUROPÄISCHE PATENTANMELDUNG

(11) **EP 1 185 109 A1**
(43) Veröffentlichungstag der Anmeldung: **06.03.2002**
(21) Anmeldenummer: 00117157.8
(22) Anmeldetag: 10.08.2000
(51) Int. Cl.: H04N 7/50

(54) **Verfahren und Vorrichtung zur Speicherung von Videobildern sowie Mobilfunkgerät**

(71) Anmelder: SIEMENS AKTIENGESELLSCHAFT, 80333 München (DE)
(72) Erfinder: Schaeffer, Joerg, 81369 München (DE)

(57) **Zusammenfassung**

Erläutert wird unter anderem ein Verfahren zur Bearbeitung von Bildern aus matrixförmig angeordneten Bildelementen. Die Anzahl der Bildelemente eines Bildes ist durch den Aufbau einer Bildwandlereinheit, ein Übertragungsprotokoll oder durch ein standardisiertes Bildformat vorgegeben. Die Bilddaten werden segmentiert in verschiedenen Speichereinheiten (120 und 122) gespeichert. Dadurch, dass im Wesentlichen alle Bilddaten des Bildes gemeinsam in den verschiedenen Speichereinheiten (120 und 122), abhängig von der Segmentierung gespeichert werden, lassen sich nachfolgende Bildbearbeitungsverfahren auf einfache Art ausführen.

## Beschreibung

Die Erfindung betrifft ein Verfahren zur Bearbeitung von Bildern aus matrixförmig angeordneten Bildelementen. Bilddaten legen die Darstellungsart der Bildelemente eines Bildes fest. Beispielsweise enthalten die Bilddaten Luminanz- und/oder Chrominanzwerte bestimmter Bildelemente. Die Bildelemente sind beispielsweise schwarz oder weiß und haben die Form eines Quadrates oder eines Fleckes mit etwa kreisförmigem Umriss. Die Anzahl der Bildelemente eines Bildes wird durch den Aufbau einer Bildwandlereinheit, durch ein Übertragungsprotokoll oder gemäß einem standardisierten Bildformat vorgegeben. So gehören beispielsweise zu dem sogenannten BMP-Format (Bit-MaP) den Bilddaten in einem Kopfteil zugeordnete Angaben zur Breite und Höhe des Bildes in Bildelementen ausgedrückt. Ein anderes verbreitetes Format ist das sogenannte YUV-Format.

Die Bildelemente werden beispielsweise mit Hilfe einer Wandlereinheit erzeugt, die einen Bildbereich zeilenweise in einer Zeilenrichtung abtastet. Außerdem wird das Bild in einer quer zur Zeilenrichtung liegenden Spaltenrichtung abgetastet. Üblicherweise beträgt der Winkel zwischen Zeilen- und Spaltenrichtung 90°. Ein Bild bezeichnet im Rahmen dieser Anmeldung ein Gesamtbild. Das Bild wird zur besseren Bearbeitung in Teilbilder zerlegt, die auch als Blöcke bzw. Makroblöcke bezeichnet werden.

Bei bekannten Verfahren werden beispielsweise sämtliche Bilddaten eines Bildes in einer einzigen physikalischen Speichereinheit gespeichert. Bei dieser Speicherung ist der Zugriff auf Teile eines Datenwortes erschwert, weil Bilddaten nebeneinanderliegender Bildelemente oft zwei aufeinanderfolgende Zugriffe auf zwei Datenworte mit anschließenden Ausblendungs-operationen (z.B. ODER-, UND-Operation) erfordern, obwohl die betreffenden Bilddaten auch in einem Datenwort gespeichert werden könnten.

Es ist Aufgabe der Erfindung, ein Verfahren und Bildbearbeitungssystem zur Bearbeitung von Bildern aus matrixförmig angeordneten Bildelementen anzugeben, mit deren Hilfe die Bilder auf einfache Art bearbeitet werden können. Außerdem soll ein Mobilfunkgerät angegeben werden, das zur Ausführung des Verfahrens geeignet ist.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Die Erfindung geht von der Überlegung aus, dass eine einfache Bearbeitung der Bilddaten dann möglich ist, wenn das Bild segmentiert wird und die Bilddaten eines Segmentes jeweils in einer eigenen Speichereinheit gespeichert werden. Dies ermöglicht es nämlich, auf die Speichereinheiten mit verschiedenen Bussystemen zuzugreifen, die unterschiedliche Busbreite haben. Beispielsweise könnte der Datenbus eines Prozessorsystems eine marktübliche Breite von 32 Bit haben und eine spezielle Hardware für zeitkritische Bildbearbeitungsvorgänge eine x-mal so große Datenbus-Bit-Breite, wobei x eine natürliche Zahl größer Zwei ist.

Die Erfindung geht weiterhin von der Erkenntnis aus, dass eine Segmentierung nur dann zu einem einfachen Verfahren führt, wenn das gesamte Bild gleichzeitig segmentiert wird, weil die Segmentierung von Teilbildern die Bussysteme des Prozessors und gegebenenfalls auch die Bussysteme der speziellen Hardware übermäßig belastet.

Beim erfindungsgemäßen Verfahren werden die Bilddaten abhängig von der Lage des zum jeweiligen Bilddatum gehörenden Bildelementes in einem bestimmten Segment des Bildes in verschiedenen Speichereinheiten als Datenworte mit einer vorgegebenen Datenwortbreite gespeichert. Die Datenwortbreite entspricht der Datenbusbreite des Prozessorsystems. Die Segmentgrenzen werden so festgelegt, dass die Darstellung der in einer Zeile oder Spalte des Segmentes liegenden Bildelemente jeweils durch die Bilddaten eines Datenwortes festgelegt wird.

Beim erfindungsgemäßen Verfahren sind verschiedene Speichereinheiten vorhanden, in welchen die Bilddaten eines Gesamt-Bildes abhängig von der Segmentierung abgespeichert werden. Bezogen auf ein Bild werden im Wesentlichen alle-Bilddaten zumindest einer Art abhängig von der Segmentierung in verschiedenen Speicherzellen der Speichereinheiten gespeichert. Dies erfordert, dass die Speicherkapazität der Speichereinheiten gleich oder größer als die Speicherkapazität ist, die für das Speichern der betreffenden Art bzw. der betreffenden Arten von Bilddaten benötigt wird. Arten von Bilddaten sind beispielsweise Luminanzdaten oder Chrominanzdaten. Sämtliche Bilddaten einer Art oder mehrerer Arten müssen somit in verschiedenen Speicherzellen der Speichereinheiten speicherbar sein. Es lassen sich zunächst alle Bilddaten segmentiert in den Speichereinheiten speichern bevor mit der Bearbeitung oder Verwendung der Bilddaten begonnen wird. Alternativ lassen sich die Bilddaten auch während des Speicherns Bearbeiten und Verwenden. Die Bilddaten werden bei der Alternative ebenfalls in verschiedenen Speicherzellen gespeichert. Jedoch lassen sich beim Speichern der Bilddaten eines Bildes zuvor in anderen Speicherzellen der Speichereinheiten gespeicherte Bilddaten desselben Bildes bereits wieder mit Bilddaten eines nächsten Bildes überschreiben, falls die Bearbeitung oder Verwendung dieser Bilddaten abgeschlossen ist. Die Bilddaten eines Bildes sind dann zu keinem Zeitpunkt gleichzeitig in den verschiedenen Speichereinheiten gespeichert.

Bei einer Weiterbildung des erfindungsgemäßen Verfahrens werden vor der Bearbeitung oder Verwendung der Bilddaten des Bildes alle Bilddaten zumindest einer Art, z.B. nur die Luminanzdaten, oder auch alle Bilddaten des Bildes gemeinsam in den verschiedenen Speichereinheiten abhängig von der Segmentierung gespeichert. Zu einem bestimmten Zeitpunkt vor der Bearbeitung oder Verwendung sind dann alle Bilddaten zumindest einer Art gleichzeitig in den verschiedenen Speichereinheiten gespeichert. Hinzu kommen gegebenenfalls noch Bilddaten eines im Vergleich zum Gesamtbild schmalen Bildrandes, z.B. bei 176 mal 144 Bildelementen je Bild ein Rand mit der Breite eines Makroblocks, d.h. z.B. mit der Breite von 16 Bildelementen. Der Randbereich und alle Bilddaten werden z.B. für die Bildstabilisierung des gesamten Bildes segmentiert gespeichert. Bei der Bildstabilisierung werden kleine Abweichungen der Kameraposition ausgeglichen. Die Segmentierung des Bildes in einem Segmentierungsvorgang ermöglicht es, die Bilddaten so in den Speichereinheiten abzulegen, dass eine spätere zusätzliche Segmentierung des Gesamt-Bildes bzw. eine zusätzliche Segmentierung von Teilbildern des Gesamt-Bildes unter Verwendung zusätzlicher Speichereinheiten entfallen kann. Bei einer Weiterbildung für die Bewegungsabschätzung greift das Prozessorsystem nur schreibend und die spezielle Hardware nur lesend auf die verschiedenen Speichereinheiten zu

Bei der Bewegungsabschätzung, der Bewegungskompensation bzw. der Bildstabilisierung werden die Luminanzdaten segmentiert, gegebenenfalls auch die Chrominanzdaten.

Bei einer Ausgestaltung des erfindungsgemäßen Verfahrens enthält das Bild Suchbereiche, die bei der Bearbeitung mit Referenzbereichen eines Referenzbildes verglichen werden. Alternativ kann auch das gesamte Bild den Suchbereich bilden, der dann mit dem gesamten Referenzbild verglichen wird. So lassen sich Verfahren zur Bildstabilisierung beim Aufnehmen einer Folge von Bildern mit Hilfe eines Bildwandlers auf einfache Art durchführen.

Ist bei einer nächsten Weiterbildung auch das Referenzbild segmentiert und werden die Bilddaten in weiteren Speichereinheiten abhängig vom Segment gespeichert, so gelten die für das Bild mit dem Suchbereich genannten technischen Wirkungen auch für das Referenzbild. Insbesondere werden zusätzliche Speicherzugriffe auf die Bilddaten des Referenzbildes zur Segmentierung von Teilbildern vermieden.

Bei einer weiteren Ausgestaltung ist das Referenzbild ein durch die Bildwandlereinheit unmittelbar vor oder unmittelbar nach der Aufnahme des Bildes mit den Suchbereichen aufgenommenes Bild. Derartige Bewegtbilder werden mit Hilfe eines CCD-Sensors (Charged Coupled Device) oder mit Hilfe einer anderen Aufnahmevorrichtung erzeugt.

Während der Bearbeitung wird bei einer Weiterbildung eine Bewegungsabschätzung mit Hilfe eines Blockvergleichs, der auch als Block-Matching bezeichnet wird, und/oder eine Bewegungskompensation durchgeführt. Solche Verfahren zur Bewegungskompensation sind beispielsweise im Standard H.263 der ITU-T (International Telecommunication Union - Telecommunication Standardization Sector) erläutert. Der Standard H.263 wurde im Standard ISO/IEC 14496-2 (International Organisation for Standardization/ International Electronical Commission) aufgegriffen, der auch als MPEG-4 (Moving Pictures Experts Group) bezeichnet wird. Auch bei den dort angesprochenen Bildbearbeitungsverfahren lässt sich das erfindungsgemäße Verfahren zur Vereinfachung der Bildbearbeitung einsetzen. Die Bildkompensation wird sowohl in einem Encoder als auch in einem zugehörigen Decoder eingesetzt. Die Bewegungsabschätzung wird nur im Encoder ausgeführt und ist derzeit nicht standardisiert. Bei der Bewegungsabschätzung ist durch die spezielle Hardware nur ein Lesen der verschiedenen Speichereinheiten erforderlich. Bei der Bewegungskompensation wird gegebenenfalls zusätzlich zum Lesen der verschiedenen Speichereinheiten durch die spezielle Hardware auch ein paralleler Schreibzugriff durch die spezielle Hardware ausgeführt, um die Vorteile des erfindungsgemäßen Verfahrens auch beim Schreiben zu nutzen.

Die Bilddaten des Bildes mit dem Suchbereich bzw. des Referenzbildes sind bei einer Weiterbildung innerhalb eines betrachteten Gerätes, z.B. innerhalb eines sendenden Mobilfunkgerätes mit eingebauter Kamera und Bildwiedergabeeinheit, während der Bearbeitung nur in den verschiedenen Speichereinheiten gemeinsam gespeichert, die den VIDEO-RAM (Random Access Memory) bilden. Ein zusätzlicher Video-RAM ist nicht vorhanden. Bei der Bearbeitung in dem betrachteten Gerät ist kein Umspeichern der Bilddaten in Speichereinheiten gleicher Speicherkapazität oder größerer Speicherkapazität notwendig. Gegebenenfalls werden nur einzelne Bilddaten oder Bilddatenworte in Register gespeichert.

Die Speichereinheiten enthalten jeweils eine eigene Steuereinheit für das Lesen bzw. das Schreiben von Datenworten aus bzw. in eine Speicherzelle mit einer beim Zugriff anzugebenden Adresse. Die Steuereinheit selbst enthält einen Adressen-decoder und eine Steuerung zur Steuerung des Zugriffs.

Die verschiedenen Speichereinheiten lassen einen gleichzeitigen Zugriff auf Datenworte verschiedener Speichereinheiten zu. Bei einer Weiterbildung wird deshalb während der Bearbeitung auf mehrere Datenworte verschiedener Speichereinheiten gleichzeitig zugegriffen, um die Datenworte zu lesen oder zu schreiben.

Bei einer nächsten Weiterbildung wird aus den mehreren Datenworten gemäß einem Auswahlverfahren ein Teil der Bilddaten ausgewählt. Das Auswahlverfahren enthält bei einer nächsten Ausgestaltung einen Schritt zum Tauschen der Reihenfolge von Datenworten. Beispielsweise müssen auf Halbpixelebene Approximationen mit Hilfe der Bilddaten verschiedener Datenworte durchgeführt werden. In einem solchen Fall wird aus den Datenworten ein Teil ausgewählt der ursprünglich durch Teile verschiedener Datenworte gebildet wurde.

Bei einer Weiterbildung wird das Bild streifenweise segmentiert, so dass die Bildelemente einer ganzen Zeile bzw. einer ganzen Spalte in einem Segment liegen. Durch diese Vorgehensweise können eine Vielzahl von Bildbearbeitungsverfahren auf einfache Art durchgeführt werden, weil der Zugriff letztlich unabhängig von den Segmentgrenzen durchführbar ist.

Das Bildformat für das Bild mit dem Suchbereich und/oder für das Referenzbild, d. h. für ein Gesamtbild, ist bei einer Weiterbildung das Format Sub-QCIF (Quarter Common Interchange Format), QCIF, CIF, 4CIF oder das Format 16CIF. Diese Formate sind im Standard H.263 der ITU-T festgelegt. Die Formatangabe wird in einem Kopfteil vor den Bilddaten übertragen. Bei MPEG4 wird die Anzahl der Bildelemente pro Gesamt-Bild im Übertragungsprotokoll übermittelt, ist beispielsweise gemäß dem im Standard H.245 der ITU-T festgelegte Übertragungsprotokoll. Vorzugsweise wird die Anzahl der Bildelemente eines Bildes durch die genannten Standards oder Protokolle festgelegt. Hinzu kommen gegebenenfalls noch Bilddaten eines schmalen Randbereiches, der beispielsweise die Breite eines Makroblocks von 16 mal 16 Bildelementen hat. In der Regel wird durch den Bildinhalt, z.B. die Darstellung einer Szene, wie sie einem Betrachter erscheint, festgelegt, welche Bilddaten ein Gesamtbild bilden. Teilbilder enthalten dagegen nur Ausschnitte des Gesamtbildes.

Die Erfindung betrifft auch ein Bildbearbeitungssystem. Eine mit den Speichereinheiten über ein Bussystem für die Übertragung jeweils eines Datenwortes einer vorgegebenen Datenwortbreite verbundene Bearbeitungseinheit, speichert abhängig von der Lage des zum jeweiligen Bilddatum gehörenden Bildelements in einem bestimmten Segment des Bildes die Bilddaten in einer der beiden Speichereinheiten.

Die Speichereinheiten sind über ein weiteres Bussystem für die parallele bzw. gleichzeitige Übertragung mehrerer Datenworte verschiedener Speichereinheiten mit einer Zugriffseinheit verbunden. Im erfindungsgemäßen Bildbearbeitungssystem haben die Speichereinheiten eine Speicherkapazität, die die gemeinsame Speicherung im Wesentlichen aller Bilddaten des Bildes abhängig von der Segmentierung ermöglicht. Die Anzahl der Bildelemente eines Bildes ist durch den Aufbau einer Bildwandlereinheit und/oder gemäß einem Übertragungsprotokoll und/oder gemäß einem standardisierten Bildformat vorgegeben. Randbereiche können gegebenenfalls als nicht zum Bild gehörend betrachtet werden bzw. Ergänzen das standartisierte Bildformat.

Das Bildbearbeitungssystem ermöglicht es, dass die Bilddaten mit unterschiedlicher Datenwortbreite bearbeitet werden können. Die Bearbeitungseinheit enthält beispielsweise einen Prozessor mit einer externen Datenwortbreite von 8, 16 oder einem anderen Vielfachen von 8 Bit. Die Zugriffseinheit ist eine Hardware mit einer Bearbeitungsbreite die dem x-fachen der Datenwortbreite des Prozessors entspricht, wobei x eine natürliche Zahl größer Eins ist. Ohne umfangreiche Umspeichervorgänge lassen sich so eine Vielzahl von Bildbearbeitungsverfahren ausführen. Die Zugriffseinheit gibt entweder Datenworte der x-fachen Datenwortbreite oder einer anderen Datenwortbreite aus, wobei dann die Datenworte durch eine Auswahl bestimmter Daten aus den parallel gelesenen Datenworten gebildet werden.

Bei einer Weiterbildung ist das Bildbearbeitungssystem so aufgebaut, dass es für die Durchführung des erfindungsgemäßen Verfahrens oder dessen Weiterbildungen geeignet ist. Somit gelten die oben genannten technischen Wirkungen auch für das Bildbearbeitungssystem.

Die Erfindung betrifft außerdem ein Mobilfunkgerät, welches das erfindungsgemäße Bildbearbeitungssystem bzw. dessen Weiterbildungen enthält. Das Mobilfunkgerät erhält bzw. sendet die Bildsignale über eine Funkstrecke, beispielsweise auf einer Frequenz von 800 Gigahertz. Das Mobilfunkgerät ist tragbar und ermöglicht es, Bild- und Sprachdaten zu senden und zu empfangen.

Im Folgenden werden Ausführungsbeispiele der Erfindung anhand der beiliegenden Zeichnungen erläutert. Darin zeigen:
Fig. 1 ein Bildbearbeitungssystem für die Bewegungsabschätzung,
Fig. 2 ein segmentiertes Bild aus matrixförmig angeordneten Bildelementen,
Fig. 3 die Zuordnung von Bildsegmenten des Bildes zu zwei Speichereinheiten,
Fig. 4 ein zweites Ausführungsbeispiel für eine Zuordnung von Bildsegmenten des Bildes zu drei Speichereinheiten, und
Fig. 5 die Darstellung eines bei der Bewegungsabschätzung eingesetzten Referenz- und Suchbereiches.

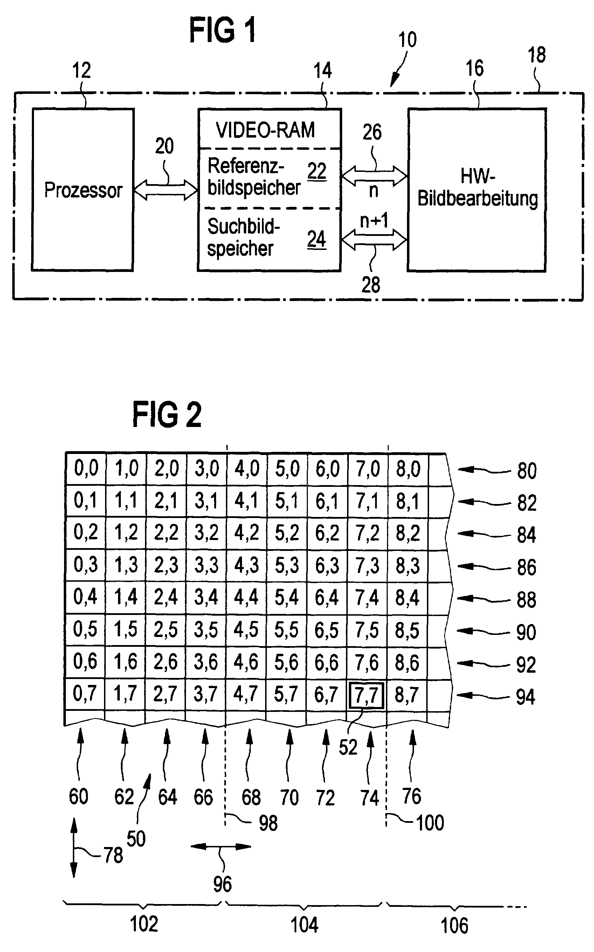

Figur 1 zeigt ein Bildbearbeitungssystem 10, das einen Prozessor 12, einen VIDEO-Speicher 14 und eine Bildbearbeitungsschaltung 16 enthält. Das Bildbearbeitungssystem 10 ist Bestandteil eines Mobilfunktelefons 18. Das Mobilfunktelefon 18 empfängt über eine nicht dargestellte Empfangseinheit Bild-und Sprachsignale, die vom Prozessor 12 bearbeitet werden. Andererseits erzeugt das Mobilfunktelefon 18 auch selbst Sprach- und Bildsignale und sendet diese. Das Mobilfunktelefon 18 ist mit einer Kamera bzw. einem CCD-Element (Charged Coupled Device) und einer Bildwiedergabeeinheit ausgerüstet.

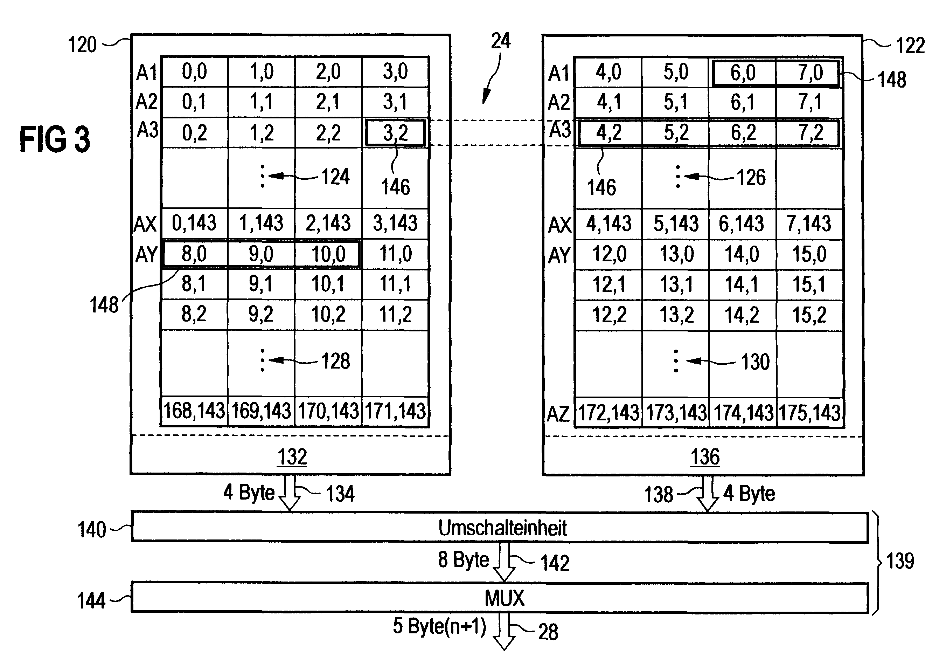

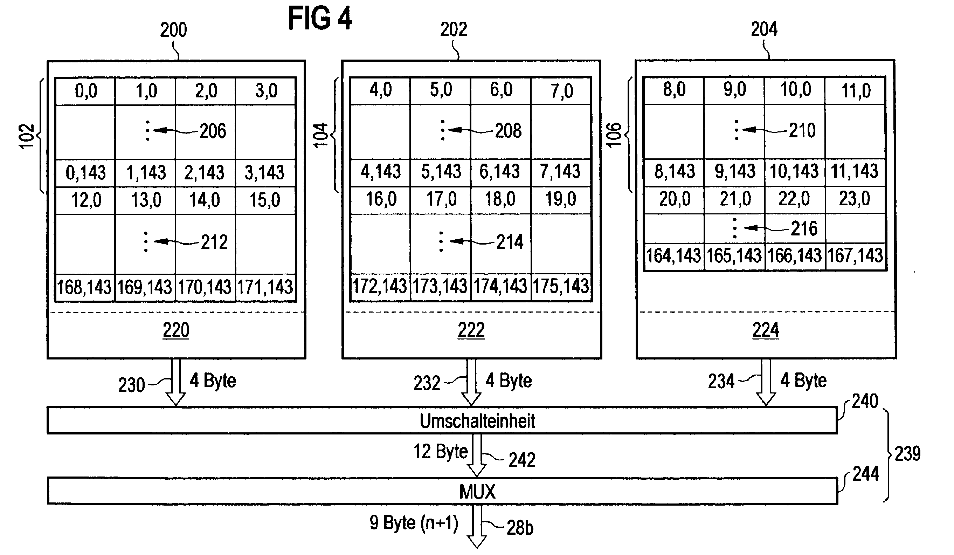

Der Prozessor 12 speichert im VIDEO-Speicher 14 unter Verwendung eines Datenbusses 20 Bilddatenworte, die eine Wortbreite von 32 Bit haben. Die Bilddaten eines zuletzt aufgenommenen Bildes werden in einem Referenzbildspeicher 22 des VIDEO-Speichers 14 gespeichert. Die Daten eines zuvor vom Mobilfunktelefon 18 empfangenen Bildes wurden in einem Suchbildspeicher 24 des VIDEO-Speichers 14 gespeichert. Der Referenzbildspeicher 22 und der Suchbildspeicher 24 sind segmentiert, wie unten anhand der Fig. 3 und 4 erläutert. Dies bedeutet, dass einzelne Segmente des Referenzbildes bzw. des Suchbildes in verschiedenen Speichereinheiten gespeichert sind.

Aufgrund der Segmentierung ist es möglich, aus den Speichereinheiten des Referenzbildspeichers 22 mehrere Datenworte der Bit-Breite 32 Bit gleichzeitig mit Hilfe einer Zugriffseinheit auszulesen, siehe Figur 3, Bezugszeichen 139. Anschließend werden Teile dieser Datenworte zu einem neuen Datenwort zusammengefügt und als ein Datenwort auf einem Datenbus 26 zwischen Referenzbildspeicher 22 und Bildbearbeitungsschaltung 16 ausgegeben. Die Datenwortbreite des Datenbusses 26 ist beispielsweise gleich der Datenwortbreite des Datenbusses 20. Die Anzahl der Bytes, die gleichzeitig mit Hilfe des Datenbusses 26 übertragen werden können, wird durch den Kleinbuchstaben n bezeichnet. Im ersten Ausführungsbeispiel ist n gleich 4, d.h. die Datenwortbreite des Datenbusses 26 beträgt 32 Bit. Das Ausführungsbeispiel betrifft insbesondere das sogenannte YUV-Format.

Der Suchbildspeicher 24 enthält ebenfalls mehrere Speichereinheiten, die zur Segmentierung des Suchbildes dienen. Zwischen Suchbildspeicher 24 und Bildbearbeitungsschaltung 16 liegt ein Datenbus 28, der ein Byte breiter als der Datenbus 26 ist. Im ersten Ausführungsbeispiel hat der Datenbus 28 eine Breite von fünf Byte, d.h. von 40 Bits.

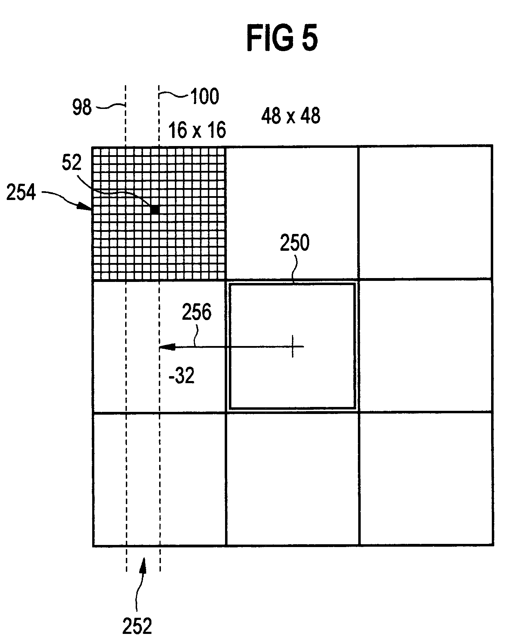

Die Bildbearbeitungsschaltung 16 dient zur Durchführung einer Bewegungsabschätzung zwischen aufeinander folgenden Bildern. Die beim Senden von Bildern im Mobilfunktelefon 18 durchgeführte Bewegungsabschätzung wird unten anhand der Fig. 5 näher erläutert.

Fig. 2 zeigt ein segmentiertes Bild 50, das matrixförmig angeordnete Bildelemente enthält, beispielsweise das Bildelement 52. Das Bild 50 hat das Format eines QCIF-Bildes, d.h. 176 Bildelemente pro Zeile und 144 Bildelemente pro Spalte. Die Bildelemente werden im Folgenden durch ihre Position innerhalb der Matrix bezeichnet. Die Bilddaten werden im Folgenden durch die Position der Bildelemente bezeichnet, denen sie zugeordnet sind. Dabei wird zuerst die Spaltennummer und dann die Zeilennummer angegeben, in der das jeweilige Bildelement angeordnet ist. In Fig. 2 sind neun Spalten des Bildes 50 teilweise dargestellt, die von links beginnend mit den Bezugszeichen 60 bis 76 bezeichnet sind. Ein Doppelpfeil 78 gibt die Spaltenrichtung an. Acht Zeilen sind von oben nach unten mit Bezugszeichen 80 bis 94 bezeichnet. Die Zeilenrichtung wird durch einen Doppelpfeil 96 verdeutlicht. Bei der Zählung der Spalten und Zeilen wird mit Null begonnen, so dass beispielsweise die achte Spalte 74 durch den numerischen Wert "7" bezeichnet wird. Das Bildelement 52 hat in der Matrix die Position "7,7".

Zur übersichtlicheren Darstellung werden im Folgenden nur die Luminanzdaten des Bildes 50 betrachtet. Zur Speicherung der Bilddaten eines Bildelementes werden im Ausführungsbeispiel acht Bit benötigt. Somit lassen sich die Bilddaten von jeweils vier Bildelementen in einem Datenwort der Datenwortbreite 32 Bit speichern. Bei der Speicherung der Bilddaten in Datenworten wird mit den Bilddaten des Bildelementes "0,0" begonnen. Danach werden die Bilddaten der rechts daneben liegenden Bildelemente "1,0", "2,0" und "3,0" in das Datenwort aufgenommen. Durch die Datenwortgröße wird die Lage von Segmentgrenzen 98 und 100 festgelegt, die in Spaltenrichtung 78 liegen.

Das links der Segmentgrenze 98 liegende Segment enthält somit 144 Zeilenabschnitte aus jeweils vier Bildelementen. Dies gilt auch für das zwischen den Segmentgrenzen 98 und 100 liegende Segment 104 und ein rechts neben der Segmentgrenze 100 liegendes Segment 106.

Fig. 3 zeigt die Zuordnung der Bildsegmente des Bildes 50 zu zwei Speichereinheiten 120 und 122 des Suchbildspeichers 24. Die Bilddaten der Segmente 102, 104, 106, usw. des Bildes 50 werden segmentweise abwechselnd in der Speichereinheit 120 bzw. in der Speichereinheit 122 gespeichert. Deshalb sind ab einer Adresse A1 beginnend in der Speichereinheit 120 die Bilddaten des Segmentes 102 gespeichert, vgl. Bilddaten des Bildelementes "0,0" an der Adresse A1 und die Bilddaten des Bildelementes an der Bildposition "3,143" an der Adresse AX der Speichereinheit 120. Die nicht in Fig. 3 dargestellten Bilddaten des Segmentes 102 sind durch Punkte 124 angedeutet.

Die Bilddaten des Segmentes 104 werden in der Speichereinheit 122 ab der Speicheradresse A1 beginnend bis zur Speicheradresse AX gespeichert. Punkte 126 deuten nicht dargestellte Bilddaten des Segments 104 an. Das nächste Segment 106 wird wieder in der Speichereinheit 120 beginnend ab der Adresse AY gespeichert, die der Adresse AX unmittelbar folgt. Das rechts neben dem Segment 106 liegende Segment wird in der Speichereinheit 122 ab einer Adresse AY gespeichert, die der Adresse AX dieser Speichereinheit 122 unmittelbar folgt. Die Speicherung der weiteren Segmente des Bildes 50 in den Speichereinheiten 120 und 122 erfolgt nach dem gleichen Verfahren, vgl. Punkte 128 und 130. An einer Adresse AZ der Speichereinheit 122 ist das Datenwort gespeichert, das die Bilddaten der untersten Zeile des rechts außen liegenden Segments des Bildes 50 enthält, siehe beispielsweise die Bilddaten des Eck-Bildelements "175, 143".

Die Speichereinheit 120 enthält eine Steuereinheit 132, die den Zugriff auf die Speicherzellen der Speichereinheiten 120 steuert und beim Lesen Datenworte auf einem Datenbus 134 ausgibt, der eine Bit-Breite von 32 Bit hat, d.h. von vier Byte. Die Speichereinheit 122 enthält eine Steuereinheit 136, die den Zugriff auf die Speicherzellen der Speichereinheit 122 steuert und beim Lesen von Datenworten die Datenworte auf einem Datenbus 138 ausgibt, der ebenfalls eine Bit-Breite von 32 Bit hat. Die Datenbusse 134 und 138 führen zu einer Zugriffseinheit 139, die eine Umschalteinheit 140 enthält. Abhängig von einem nicht dargestellten Steuersignal verbindet die Umschalteinheit 140 die Datenbusse 134 und 136 mit einem Datenbus 142 in der in Fig. 3 dargestellten Lage. Das heißt, dass der linke Teil des Datenbusses 142 die Signale des Datenbusses 134 führt. Der rechte Teil des Datenbusses 142 wird mit dem Datenbus 138 verbunden. Die Reihenfolge der Daten innerhalb der Datenworte bleibt unverändert. Hat das Steuersignal dagegen den anderen Wert, so wird die Zuordnung der Datenbusse 134 und 138 zum Datenbus 142 mit Hilfe der Umschalteinheit 140 vertauscht. Der Datenbus 138 ist dann mit der linken Hälfte des Datenbusses 142 verbunden. Der Datenbus 134 ist mit der rechten Hälfte des Datenbusses 142 verbunden. Die Reihenfolge der Daten innerhalb der Datenworte eines Datenbusses bleibt wieder unverändert.

Der Datenbus 142 führt zu einer ebenfalls zur Zugriffseinheit 139 gehörenden Multiplexeinheit 144, mit deren Hilfe fünf zusammenhängende Byte des Datenbusses 142 beginnend an einer Byte-Grenze ausgewählt werden. Der Kleinbuchstabe n bezeichnet die Breite eines Datenwortes vor der eigentlichen Bildbearbeitung. Die Multiplexeinheit 144 ist ausgangsseitig mit dem Datenbus 28 verbunden, der wie bereits erwähnt zur Bildbearbeitungsschaltung 16 führt, siehe Fig. 1. Bei Halbpixelbearbeitung approximiert eine nicht dargestellte Einheit aus den fünf Byte die Werte der Halbpixel. Das Ergebnis sind vier Byte für die weitere Bearbeitung.

Die Funktionen der Umschalteinheit 140 und der Multiplexeinheit 144 werden anhand zweier Beispiele deutlich. Es sei angenommen, dass für die Bildbearbeitung ein Datenwort benötigt wird, das die Daten der Bildelemente an den Bildpositionen "3,2", "4,2", "5,2", "6,2" und "7,2" enthält, siehe Rahmen 146. Die Steuereinheiten 132 und 136 werden so angesteuert, dass die an den Adressen A3 in der Speichereinheit 120 bzw. 122 gespeicherten Datenworte auf dem Datenbus 134 bzw. 138 ausgegeben werden. Die Umschalteinheit 140 wird so angesteuert, dass die in Fig. 3 dargestellte Reihenfolge der Datenworte unverändert bleibt. Mit Hilfe der Multiplexeinheit 144 werden dann das rechte Byte des an der Adresse A3 in der Speichereinheit 120 gespeicherten Datenwortes und die Bytes des an der Adresse A3 in der Speichereinheit 122 gespeicherten Datenwortes selektiert. Auf dem Datenbus 28 wird das durch den Rahmen 146 bezeichnete Datenwort ausgegeben.

Soll dagegen ein zusammenhängender Bildbereich der Bildelemente an den Positionen "6,0", "7,0", "8,0", "9,0" und "10,0" bearbeitet werden, so muss auf die durch einen Rahmen 148 umrahmten Bilddaten zugegriffen werden. Die Steuereinheit 132 der Speichereinheit 120 wird so angesteuert, dass das Datenwort an der Adresse AY auf dem Datenbus 134 ausgelesen wird. Die Steuereinheit 136 der Speichereinheit 122 wird so angesteuert, dass das Datenwort an der Adresse A1 auf dem Datenbus 138 ausgelesen wird. Die Umschalteinheit 140 wird so angesteuert, dass der Datenbus 138 mit dem linken Teil des Datenbusses 142 und der Datenbus 134 mit dem rechten Teil des Datenbusses 142 verbunden wird. Mit Hilfe der Multiplexeinheit 144 werden dann das dritte bis siebte auf dem Datenbus 142 übertragene Byte ausgewählt, indem die diesen Bytes zugeordneten Datenleitungen des Datenbusses 142 mit den Datenleitungen des Datenbusses 28 verbunden werden. Hier beginnt die Zählung der Bytes links mit Eins. Die Bildbearbeitungsschaltung 16 berechnet dann beispielsweise die zwischen den Bildelementen "6,0" bis "10,0" liegenden Halbpixelwerte und führt die Bewegungsabschätzung, die Bewegungskompensation im Rahmen der Encodierung und/oder die Bildstabilisierung auf der Ebene von Halbpixeln durch.

Wird die Bewegungsabschätzung dagegen auf der Ebene von Pixeln durchgeführt, so umfassen die Rahmen 146 und 148 nur jeweils die Bilddaten von vier Bildelementen. Das Verfahren zum Auswählen der Bilddaten bleibt jedoch grundsätzlich gleich. Auf dem Datenbus 28 werden bei einer Bewegungsabschätzung auf Pixelebene beispielsweise nur die ersten vier Byte ausgewertet.

Fig. 4 zeigt ein zweites Ausführungsbeispiel für eine Zuordnung von Bildsegmenten des Bildes 50, siehe Fig. 2, auf drei Speichereinheiten 200 bis 204, die Bestandteil des Suchbildspeichers 24 sind. Die Bilddaten des ganz links liegenden Segments 102 werden in der Speichereinheit 200 beginnend ab der kleinsten Adresse gespeichert. Punkte 206 deuten Bilddaten an, die zwischen den Bilddaten für die Bildelemente "0,0", "1,0", "2,0" und "3,0" sowie für die Bildelemente "0,143", "1,43", "2,143" und "3,143" liegen. Die Bilddaten für die Bildelemente des rechts neben dem Segment 102 liegenden Segmentes 104 werden in der Speichereinheit 202 beginnend ab der kleinsten Adresse gespeichert. Punkte 208 deuten die in Fig. 4 nicht dargestellten Bilddaten des Segmentes 104 an.

Die Bilddaten des rechts neben dem Segment 104 liegenden Segmentes 106 werden in der Speichereinheit 204 beginnend ab der kleinsten Adresse gespeichert. Punkte 210 deuten die in Fig. 4 nicht dargestellten Bilddaten des Segmentes 106 an.

Die Bilddaten des unmittelbar rechts neben dem Segment 106 liegenden Segmentes werden in der ersten Speichereinheit 200 an Adressen gespeichert, die den Adressen zur Speicherung der Bilddaten für das Segment 206 folgen. Die Bilddaten der anderen Segmente des Bildes 50 werden nach dem gleichen Schema auf die Speichereinheiten 200 bis 204 verteilt. Dies bedeutet, dass die Segmente von links nach rechts in dieser Reihenfolge nacheinander auf die Speichereinheiten 200, 202 und 204 verteilt werden. Nach dem Belegen der Speichereinheit 204 mit einem Segment wird wieder die Speichereinheit 200 belegt. Punkte 212 deuten die Bilddaten der weiteren in der Speichereinheit 200 hinterlegten Segmente an. Punkte 214 deuten die Bilddaten der anderen Segmente an, die in der Speichereinheit 202 hinterlegt worden sind. In der Speichereinheit 204 deuten Punkte 216 auf die Bilddaten der Segmente hin, die außer den Bilddaten des Segmentes 106 in der Speichereinheit 206 hinterlegt worden sind.

Mit anderen Worten lässt sich das Verfahren zur Segmentierung so beschreiben, dass bei einer Zählung der Segmente von links nach rechts mit Null beginnend in der Speichereinheit 200 die Bilddaten aller Segmente gespeichert werden, deren Nummer ganzzahlig durch drei teilbar sind, d.h. die Segmente 0, 3, 6, usw. In der Speichereinheit 202 werden die Bilddaten aller Segmente gespeichert, deren Nummer bei Division durch 3 den Rest 1 ergibt, d.h. die Segmente 1, 4, 7, usw. In der Speichereinheit 204 werden alle Segmente gespeichert, deren Nummer bei einer Division durch 3 den ganzzahligen Rest 2 ergibt, d.h. die Segmente 2, 5, 8, usw. Die Division mit ganzzahligem Rest wird auch als Modulooperation bezeichnet.

Bei anderen Ausführungsbeispielen werden mehr als drei Speichereinheiten verwendet. Die Aufteilung der Segmente auf die Speichereinheiten erfolgt dann nach demselben Schema, wobei jedoch der Divisionsfaktor durch die Anzahl der Speichereinheiten vorgegeben ist.

Die Speichereinheiten 200, 202 und 204 enthalten in dieser Reihenfolge jeweils eine Steuereinheit 220, 222 bzw. 224, welche den Zugriff auf die in der jeweiligen Speichereinheit 200, 202 bzw. 204 gespeicherten Datenworte steuert. Die Steuereinheit 220, 222 bzw. 224 gibt ein zu lesendes Datenwort auf einem jeweils vier Byte breiten Datenbus 230, 232 bzw. 234 aus. Die Datenbusse 230, 232 und 234 führen zu einer Zugriffseinheit 239, die eine Umschalteinheit 240 enthält. Die Umschalteinheit 240 ist ausgangsseitig mit einem 12 Byte breiten Datenbus 242 verbunden. Mit Hilfe eines nicht dargestellten Steuersignals kann die Umschalteinheit 240 so gesteuert werden, dass die Datenbusse 230, 232 und 234 in verschiedenen Reihenfolgen mit dem Datenbus 242 verbunden werden. In einer Betriebsart ist der Datenbus 230 beispielsweise mit dem linken Teil des Datenbusses 242, der Datenbus 232 mit dem mittleren Teil des Datenbusses 242 und der Datenbus 234 mit dem rechten Teil des Datenbusses 242 verbunden. Allgemein ausgedrückt hat die Umschalteinheit 240 die Funktion, die aus den Speichereinheiten 200, 202 und 204 gelesenen Datenworte nach Art eines Rotationsregisters datenwortweise zu verschieben.

Der Datenbus 242 führt zu einer ebenfalls in der Zugriffseinheit 239 enthaltenen Multiplexeinheit 244, mit deren Hilfe 9 Byte des auf dem Datenbus 242 übertragenen Datenwortes auf einen Datenbus 28b geführt werden. Die 9 Byte liegen dabei innerhalb der 12 Byte beginnend an einer Byte-Grenze unmittelbar nebeneinander. Eine nicht dargestellte Steuerschaltung der Multiplexeinheit 244 veranlasst die Auswahl der benötigten Bytes. Der Datenbus 28b führt zu einer nicht dargestellten Bildbearbeitungsschaltung, die beispielsweise eine Bewegungsabschätzung ausführt.

Beim zweiten Ausführungsbeispiel enthält auch der Referenzbildspeicher 22 drei Speichereinheiten. Die Zuordnung der Bilddaten eines Referenzbildes erfolgt nach demselben Schema wie die Zuordnung der Bilddaten des Bildes 50 auf die Speichereinheiten 200, 202 und 204. Die Speichereinheiten zur Speicherung des Referenzbildes sind ebenso wie die Speichereinheiten 200, 202 und 204 mit einer weiteren Umschalteinheit verbunden, der eine Multiplexeinheit nachgeschaltet ist. Die Multiplexeinheit des Referenzbildspeichers 22 unterscheidet sich jedoch von der Multiplexeinheit 244 dadurch, dass nur 8 Byte aus den 12 Bytes ausgewählt werden können, die von der Umschalteinheit ausgegeben werden.

Fig. 5 zeigt die Darstellung eines bei der Bewegungsabschätzung mit Hilfe der Bildbearbeitungsschaltung 16, siehe Fig. 1, eingesetzten Referenzbereiches 250 und eines Suchbereiches 252. Es sei angenommen, dass gemäß MPEG-4 mit einem Parameter fcodel gearbeitet wird. Bei anderen Ausführungsbeispielen ist der Suchbereich größer als ein Makroblock. Das Verfahren wird auch durch die Verarbeitung von Vierteln eines Makroblocks ausgeführt.

Der Referenzbereich 250 hat eine Größe von 16 mal 16 Bildelementen, die einen Makroblock bilden, der in einem Bild enthalten ist, das nach dem Bild 50 vom Mobilfunktelefon 18 empfangen worden ist. Der Suchbereich 252 wird aus neun in einer Matrix aus drei mal drei Makroblöcken angeordneten Makroblökken des Bildes 50 gebildet. Jeder Makroblock enthält 16 mal 16 Bildelemente, siehe Makroblock 254. Es sei angenommen, dass der Makroblock 254 die Bildelemente im rechten oberen Teil des Bildes 50 enthält. Das Bildelement 52 ist im Suchbereich 252 schwarz dargestellt.

Der Referenzbereich 250 befindet sich in dem nach dem Bild 50 übertragenen Bild an einer Position, die der Position des mittleren Makroblocks des Suchbereichs 252 im Bild 50 entspricht. Bei der Bewegungsabschätzung werden die Bildelemente des Referenzbereiches 250 mit Bildelementen des Suchbereichs 252 verglichen, um Bewegungsvektoren zu ermitteln, siehe beispielsweise Bewegungsvektor 256, der eine Bewegung um 32 Halbpixel verdeutlicht.

Durch die Segmentierung des Bildes 50, siehe Segmentgrenzen 98 und 100, sowie durch die Segmentierung des nachfolgenden Bildes mit dem Suchbereich 250 lässt sich die Bewegungsabschätzung ohne zusätzliche Umspeicherung der Bilddaten durchführen. Die Bilddaten lassen sich durch die Bildbearbeitungsschaltung 16 mit einer Bearbeitungsbreite aus dem VIDEO-Speicher 14 entnehmen, die größer als die Bearbeitungsbreite auf dem Datenbus 20 ist.

Bei einem anderen Ausführungsbeispiel werden den anhand der Figuren 1, 3 und 4 erläuterten Baueinheiten ähnliche Baueinheiten zur Bewegungskompensation verwendet. Die Bewegungskompensation ist gemäß Standard H.263 oder MPEG4 sowohl Bestandteil eines Encoders des Bildbearbeitungssystems 10, z.B. eines sendenden Mobilfunktelefons 18 mit Kamera bzw. CCD-Sensor, als auch Bestandteil des Decoders, z.B. in demselben Mobilfunktelefon 18 mit Flüssigkeitskristallanzeige zur Darstellung eines empfangenen Bildes. Bei der Bewegungskompensation bleiben die Zugriffseinheiten zum Lesen unverändert. Zusätzlich gibt es auch Zugriffseinheiten ähnlichen Aufbaus zum Schreiben der verschiedenen Speichereinheiten bzw. zur Ausgabe eines Datenwortes auf den Prozesserbus.

## Patentansprüche

1. Verfahren zur Bearbeitung von Bildern (50) aus matrixförmig angeordneten Bildelementen (52),
bei dem Bilddaten die Darstellungsart der Bildelemente (52) eines Bildes (50) festlegen,
die Anzahl der Bildelemente (52) eines Gesamt-Bildes vom Aufbau einer Bildwandlereinheit und/oder von einem Übertragungsprotokoll und/oder von einem standardisierten Bildformat abhängt,
Bilddaten (52) abhängig von der Lage des zum jeweiligen Bilddatum gehörenden Bildelementes (52) in einem bestimmten Segment (104) des Bildes (50) in verschiedenen Speichereinheiten (120, 122) als Datenworte mit einer vorgegebenen Datenwortbreite gespeichert werden,
die Segmentgrenzen (98, 100) so festgelegt werden, dass die Darstellung der in einer Zeile (80) oder Spalte eines Segments (104) liegenden Bildelemente durch die Bilddaten jeweils eines Datenwortes festgelegt wird,
verschiedene Speichereinheiten (120, 122) vorhanden sind, in welchen die Bilddaten des Bildes (50) abhängig von der Segmentierung gespeichert werden,
und bei dem im Wesentlichen alle Bilddaten zumindest einer Art. des Gesamt-Bildes in verschiedenen Speicherzellen der Speichereinheiten (120, 122) gespeichert werden.

2. Verfahren nach Anspruch 1, **dadurch gekennzeichnet,dass** vor der Bearbeitung oder Verwendung der Bilddaten des Gesamt-Bildes im Wesentlichen alle Bilddaten des Bildes (50) gemeinsam in den verschiedenen Speichereinheiten (120, 122) abhängig von der Segmentierung gespeichert werden.

3. Verfahren nach Anspruch 1 oder 2, **dadurch gekennzeichnet,dass** das Bild (50) mindestens einen Bearbeitungsbereich (252) enthält, dessen Bildelemente (52) bei der Bearbeitung mit Bildelementen mindestens eines Referenzbereiches (250) eines Referenzbildes verglichen oder verknüpft werden.

4. Verfahren nach Anspruch 3, **dadurch gekennzeichnet,dass** das Referenzbild die gleiche Anzahl von Bildelementen wie das Bild (50) mit dem Bearbeitungsbereich enthält,
die Bilddaten des Referenzbildes abhängig von der Lage des zum jeweiligen Bilddatum gehörenden Bildelementes in einem bestimmten Segment des Referenzbildes in verschiedenen weiteren Speichereinheiten (22) als Datenworte mit einer vorgegebenen Datenwortbreite gespeichert werden,
die Segmentgrenzen im Referenzbild so festgelegt werden, dass die Darstellung der in einer Zeile oder Spalte eines Segmentes liegenden Bildelemente durch die Bilddaten jeweils eines Datenwortes festgelegt wird,
und dass vorzugsweise vor der Bearbeitung oder Verwendung im Wesentlichen alle Bilddaten des Referenzbildes gemeinsam oder nacheinander in verschiedenen Speicherzellen der verschiedenen weiteren Speichereinheiten (22) abhängig von der Segmentierung des Referenzbildes gespeichert werden.

5. Verfahren nach Anspruch 3 oder 4, **dadurch gekennzeichnet,dass** das Referenzbild ein durch die Bildwandlereinheit unmittelbar vor oder unmittelbar nach der Aufnahme des Bildes (50) mit dem Bearbeitungsbereich aufgenommenes Bild ist.

6. Verfahren nach einem der Ansprüche 3 bis 5, **dadurch gekennzeichnet, dass** während der Bearbeitung eine Bewegungsabschätzung mit Hilfe eines Blockvergleichs und/oder einer Bewegungskompensation, insbesondere eine Bewegungskompensation gemäß Standard H.263 ohne bzw. mit Anhängen und /oder eine Bildstabilisierung durchgeführt wird.

7. Verfahren nach einem der vorhergehenden Ansprüche, d adurch**gekennzeichnet**, dass die Bilddaten des Bildes (50) bzw. des Referenzbildes während der Bearbeitung in dem Gerät nur in den verschiedenen Speichereinheiten (22 bzw. 24) gemeinsam gespeichert werden,
und dass insbesondere ohne Umspeichern in Speichereinheiten gleicher Speicherkapazität oder größerer Speicherkapazität gearbeitet wird.

8. Verfahren nach einem der vorhergehenden Ansprüche, d adurch **gekennzeichnet**, dass die Speichereinheiten (120, 122) bzw. die weiteren Speichereinheiten jeweils eine eigene Steuereinheit (132, 134) für das Lesen bzw. Schreiben von Datenworten aus bzw. in eine Speicherzelle enthalten.

9. Verfahren nach einem der vorhergehenden Ansprüche, d adurch**gekennzeichnet**, dass auf die verschiedenen Speichereinheiten (120, 122) bzw. auf die verschiedenen weiteren Speichereinheiten gleichzeitig zugegriffen wird bzw. zugegriffen werden kann, um mehrere Datenworte gleichzeitig zu lesen oder zu schreiben.

10. Verfahren nach Anspruch 9, **dadurch gekennzeichnet,dass** aus den mehreren Datenworten gemäß einem Auswahlverfahren ein Teil der Bilddaten ausgewählt wird (144).

11. Verfahren nach Anspruch 10, **dadurch gekennzeichnet,dass** das Auswahlverfahren einen Schritt zum Tauschen der Reihenfolge von Datenworten enthält (140).

12. Verfahren nach einem der vorhergehenden Ansprüche, d adurch**gekennzeichnet**, dass das Bild (50) bzw. das Referenzbild streifenweise segmentiert ist, so dass die Bildelemente einer ganzen Zeile bzw. einer ganzen Spalte (60) in einem Segment (102) liegen.

13. Verfahren nach einem der vorhergehenden Ansprüche, d adurch**gekennzeichnet**, dass das Bildformat das Format Sub-QCIF, QCIF, CIF, 4CIF oder 16CIF ist, vorzugsweise erweitert um einen das Bild umgebenden Rand, oder dass das Bildformat ein gemäß Standard MPEG4 festgelegtes Format ist, das mit den genannten Formaten übereinstimmt oder zwischen diesen Formaten liegt,
und/oder dass das Übertragungsprotokoll gemäß Standard H.245 gemäß einem diesen Standard vorausgehenden Standard oder gemäß einem auf diesen Standards aufbauenden Standard arbeitet.

14. Bildbearbeitungssystem (10) zur Bearbeitung von Bildern (50) aus matrixförmig angeordneten Bildelementen (52),
mit mindestens zwei Speichereinheiten (120, 122), die Datenworte mit Bilddaten zur Festlegung der Darstellungsart von Bildelementen (52) eines Gesamt-Bildes speichern,
eine mit den Speichereinheiten (120, 122) über ein Bussystem (20) für die Übertragung von Datenworten einer vorgegebenen Datenwortbreite verbundene Bearbeitungseinheit (12), welche die Bilddaten abhängig von der Lage des zum jeweiligen Bilddatums gehörenden Bildelements in einem bestimmten Segment (102) des Bildes (50) in einer Speichereinheit (120, 122) speichert,
einer mit den Speichereinheiten (120, 122) über ein weiteres Bussystem (134, 138) für die parallele Übertragung mehrerer Datenworte verschiedener Speichereinheiten (120, 122) verbundene Zugriffseinheit (140, 144, 16),
wobei die Speichereinheiten (120, 122) eine Speicherkapazität haben, die die gemeinsame Speicherung im wesentlichen aller Bilddaten zumindest einer Art des Gesamt-Bildes ermöglicht,
und wobei die Anzahl der Bildelemente eines Gesamt-Bildes durch den Aufbau einer Bildwandlereinheit und/oder gemäß einem Übertragungsprotokoll und/oder gemäß einem standardisierten Bildformat vorgegeben ist.

15. Bildbearbeitungssystem (10) nach Anspruch 14, d adurch**gekennzeichnet**, dass es für die Durchführung eines Verfahrens nach einem der Ansprüche 1 bis 12 einsetzbar ist.

16. Mobilfunkgerät (18) **gekennzeichnet durch** ein Bildbearbeitungssystem (10) nach Anspruch 14 oder 15.
